# EUROPEAN PATENT SPECIFICATION

(11) **EP 0 680 455 B1**
(45) Date of publication and mention of the grant of the patent: **19.04.2000**
(21) Application number: 94906071.9
(22) Date of filing: 14.01.1994
(51) Int. Cl.: C01B 33/18, B07B 7/04

(54) **A method of classifying FINE PARTICLEs**
Verfahren ZUR KLASSIFIZIERUNG FEINER TEILCHEN
Procédé de CLASSIFICATion DE PARTICULES FINES

(30) Priority: 19.01.1993 US 6359
(43) Date of publication of application: 08.11.1995
(60) Divisional application: 98124676.2
(73) Proprietor: CABOT CORPORATION, Boston, MA 02109-1806 (US)
(72) Inventor: TUNISON, Donald, E., III, Tuscola, IL 61953 (US); CHURCH, Stephanie, E., Champaign, IL 61821 (US); LEMAN, Gregory, W., Savoy, IL 61874 (US); TROIKE, Carl L., Jr., Tuscola, IL 61953 (US)
(74) Representative: Fuchs Mehler Weiss & Fritzsche
(86) International application number: PCT/US94/00477
(87) International publication number: WO 94/16995

(56) References cited:
- DE-C- 900 339
- US-A- 2 850 162
- US-A- 2 968 400
- US-A- 3 130 008

## Description

### BACKGROUND OF THE INVENTION

### 1. Field of the Invention

The present invention pertains to an improved method for separating fine particles from contaminant particles suspended in a gaseous medium and, more particularly, to a method for separating fumed silica from contaminant particles.

### 2. Description of the Prior Art

Many industrial processes use particulate material either as a feed or product. Commonly, there are specifications on particle size distribution to control the solution rate, mixing behavior and segregation, optical properties, smoothness, and dustiness. Materials having a particle diameter of less than 45.0 microns (325 mesh) are commonly employed as fillers or reinforcing agents to improve the physical properties of compositions including rubbers, coatings, adhesives, paints and sealants. In particular, materials having a nominal particle diameter of between about 1.0 to about 45.0 microns are used in this manner. Examples of these materials include, but are not limited to, fumed silicas, precipitated silicas, fumed alumina, zinc oxide fume and carbon black.

Several methods have been developed to control the particle size distribution. For example, it is known to use air classifiers, fluidized beds, or rotary classifiers to separate particulate material based on particles sizes and/or densities. Several different methods and apparatus for separating particulate materials from a mixture in gas streams are described in Henderson, U.S. Patent No. 4,125,456, separating grit from carbon black, Matheson in U.S. Patent No. 2,561,396, separating mixtures of particles having different sizes, Huber in U.S. Patent No. 1,146,624, separating a stream of coarse and fine particles having substantially the same specific gravity, and Goodell in U.S. Patent No. 4,299,694, separating fine char from discharge waste of coal-fired direct reduction process. Each of these prior art processes generally operate by introducing a mixture of particles into an upwardly flowing air stream which lifts the lighter particles and allows the heavier particles to fall by gravity into a hopper. Stebbins, U.S. Patent No. 1,660,682, similarly teaches that fine dust-like particles can be separated from heavier particles by air blasting the particulate mixture into a chamber wherein the lighter particles will be carried out of the direct path of the air blast by expansion of the air. Alternatively, processes have been developed utilizing a baffle, or impingement plate, to deflect particles in a gas stream. For example, Musto, U.S. Patent No. 3,865,242, teaches an apparatus for classifying particulate matter of different densities entrained in a fluid flow stream. The apparatus includes a bend section of a duct system in which the particles are concentrated, and a baffle disposed immediately downstream of the bend section which is operative to deflect the particles transversely across the path of the gas component. A similar device is described in Clute, U.S. Patent No. 2,968,400, wherein a separator for comminuted materials of different specific gravities utilizes a blower for drawing an air borne particle suspension at a controlled flow rate through a hollow body with discharge outlets at its top and bottom. Within the hollow body a swingable baffle is disposed, adapted to be impinged by the incoming particle stream. A funnel like bottom part of the hollow body serves as discharge means for the separated coarse material. Another method and apparatus for classifying and separating components of a particulate solid substance carried in a gaseous medium is disclosed in Stark, U.S. Patent No. 3,426,893, wherein a mixture of solid substances is carried in a continuously moving gas stream and is stripped of fine particles as it moves along a series of chambers into an expansion zone, thereby avoiding the use of a complicated apparatus.

Unfortunately, there is no universal device to select exactly the desired particle size fraction for a particular feed or product, and problems such as high contaminant levels, high solids losses, and high operating costs make selection and operation of classifiers difficult. These problems are compounded when separation of extremely fine particles is required.

As previously discussed, one example of a material having a particle diameter less than about 45.0 microns is fumed silica. Fumed silica, a well known additive commonly employed to improve the physical properties of various compositions, comprises fine silicon dioxide particles generally having a particle diameter of between about 1.0 to about 45.0 microns and a bulk density of about 160 kg/m³ (10 lbs/ft³) or less.

It is desired, therefore, to develop an improved method for separating fine particles from contaminant particles suspended in a gaseous medium. More particularly, it is desired to develop a method for separating fumed silica from contaminant particles suspended in a dilute phase gas stream.

It is therefore an object of the present invention to provide an improved method for separating fine particles from contaminant particles suspended in a gaseous medium. It is a further object of the present invention to provide a method for separating fumed silica having a nominal particles diameter of between about 1.0 to about 45.0 microns from contaminant particles suspended in a dilute phase gas stream.

According to the present invention, there is provided a method for separating fine particles from contaminant particles suspended in a gaseous medium.

### BRIEF DESCRIPTION OF THE DRAWINGS

The foregoing and other objects and advantages will be more fully appreciated from the following drawings in which:
- Fig. 1: illustrates a process flow diagram of the vessel and impingement plate arrangement utilized in the present invention;
- Figs. 2 A and B: illustrate alternative impingement plate arrangements utilized in the present invention;
- Fig. 3: illustrates an overall process flow diagram of the present invention

### DETAILED DESCRIPTION OF THE INVENTION

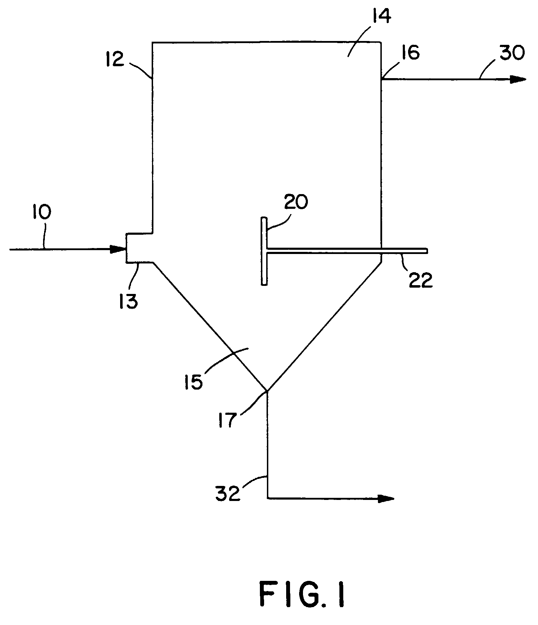

The present invention is directed to a method for separating fine particles from contaminant particles suspended in a gaseous medium. Referring to Fig. 1, the method of the present invention includes introducing a particle suspension 10 into a vessel 12 through inlet 13. Vessel 12 is typically cylindrically shaped, and has a top portion 14 and a conical bottom portion 15 with sloping side walls at approximately 60° angles. Each portion has a respective discharge outlet 16, 17. An impingement plate 20 is arranged within vessel 12 at a predetermined angle depending upon the particle sizes and flow rates of particle suspension 10. The angle of plate 20 allows for particle suspension 10 to be uniformly distributed within the vessel after impact with the plate. Impingement plate 20 can be attached to a plate rod 22 by any conventional means. Plate rod 22 allows for operator adjustment of the distance of plate 20 from inlet 13 from the exterior of vessel 12.

As noted, particle suspension 10 will be uniformly distributed within vessel 12 upon impact with plate 20. The fine particles then rise to top portion 14. The contaminant particles, and residual fine particles, settle to the bottom portion 15 of vessel 12. A fine particle stream 30 is removed through top discharge outlet 16 for packaging or further processing, while contaminant and residual fine particle stream 32 is removed through bottom discharge outlet 17 for disposal or further separation.

Particle suspension 10 is typically comprised of a mixture of fine and contaminant particles in a gaseous medium. Typically, the fine particles have a particle diameter of less than about 45.0 microns (325 mesh size). Additionally, the fine particles typically have a bulk density of less than 160 kg/m³ (10 lbs/ft³). The contaminant particles are generally comprised of relatively large particles, coarse agglomerated particles, reaction by-products, extra-process materials, and/or unreacted raw materials. Generally, the contaminant particles, sometimes referred to as grit, have a particle size and bulk density greater than the fine particles. Examples of several fine particles which can be separated from contaminant particles suspended in a gaseous medium include, but are not limited to, fumed silicas, precipitated silicas, fumed alumina, zinc oxide fume and carbon black.

Particle suspension 10 is carried in either a dilute or dense phase gas stream, the stream typically having a velocity greater than 0,025 m/s (5.0 feet per minute) depending upon the specific application and the type of fine particles desired to be separated. Any non-reactive gas can be used as the carrier gas for the fine and contaminant particles, such as nitrogen or air. Preferably, air is used as the carrier gas due to its relative convenience and low cost. The particle suspension 10 is typically transferred directly from a reactor, other process vessel, or storage tank (not shown) into vessel 12. Several conventional methods can be used to create and transport particle suspension 10, including utilizing a fan or blower, a pump, a venturi, or a pneumatic transport system using a compressed gas. Any of the known conventional methods may be appropriately controlled and adjusted by those skilled in the art to achieve the desired transport rate and fluidization of the fine and contaminant particles of particle suspension 10 into vessel 12. Similar particle transfer methods are utilized in the fine particle stream 30, as well as the contaminant and residual fine particle stream 32 to pull the fine and contaminant particles out of vessel 12 for further processing, packaging, or disposal.

The present invention is particularly effective for separating fumed silica from contaminant particles. Fumed silica, such as CAB-O-SIL® brand fumed silica (registered trademark of Cabot Corporation, Boston, MA), is produced by the hydrolysis of silicon tetrachloride vapor in a flame of hydrogen and oxygen. In the combustion process, molten spheres of silica are formed having nominal particle diameters averaging between about 0.007 to 0.027 micron. These molten spheres, termed primary particles, collide and fuse with one another to form branched, three dimensional, chain-like aggregates. As the aggregates cool below the fusion temperature of silica (approximately 1710°C) further collisions result in some reversible, mechanical entanglement or agglomeration. The agglomerated fumed silica product typically has a nominal particle diameter of less than 45.0 microns and a bulk density of less than 80 kg/m³ (5.0 lbs/ft³). The fumed silica is typically subjected to a calcination process to reduce the hydrogen chloride adsorbed on its surface during the above described production process. After calcination, the fumed silica, and contaminants therein, is suspended in air and pumped to vessel 12.

Typically, the contaminants present in the fumed silica particle suspension include silica and non-silica contaminants such as metal flakes, extra-process materials, fibers, metal oxides, as well as glass and ceramic-like fused silica particles. Typically, there are between 0 to 800 parts per million (PPM), with a mean of 50 PPM, of contaminant particles in the calciner discharge stream (particle suspension 10). Conventional settling velocity calculations are used to determine the smallest particle sizes likely to be collected at any given velocity. As noted earlier, the contaminant particle size and bulk density are, for the most part, greater than 45.0 microns and 160 kg/m³ (10 lbs/ft³), however it is not unusual to collect smaller and lighter particles.

Particle suspension 10 is transported to vessel 12 at a predetermined velocity. Typically, the lowest flow rate must be great enough to fluidize the fumed silica, and can vary with the size and type of silica and operating conditions. The highest flow rate, likewise, depends upon the desired fine particle size and the types of silica and contaminant particles. Preferably, the velocity of particle suspension 10 is appropriately adjusted in order to achieve a bulk gas velocity within the vessel between about 0,025 m/s to about 0,10 m/s (5.0 to about 20.0 feet per minute). The bulk gas velocity is the total gaseous flow of particle suspension 10 in meter (cubic feet) per second (minute) divided by the cross sectional area of vessel 12. Most preferably, the bulk gas velocity within the vessel is between about 0,045 m/s to about 0,07 m/s (9.0 to about 14.0 feet per minute).

Particle suspension 10 enters vessel 12 through inlet 13, where it is directed into impingement plate 20. After impact with impingement plate 20, particle suspension 10 is uniformly distributed within vessel 12. As is known to those skilled in the art, the heavy, coarse contaminant particles will exhibit a relatively faster settling velocity than the fine, low density, fumed silica particles, and settle to bottom portion 15. The fumed silica particles will rise to top portion 14 with the carrier gas, where they are removed through top discharge outlet 16, forming the fine particle stream 30. Stream 30 typically includes between 0 to 25 PPM contaminant particles, with a mean of about 5 PPM. Meanwhile, the contaminant particles, as well as a small amount of residual fumed silica, are periodically removed through bottom discharge outlet 17, forming the contaminant and residual particle stream 32.

Impingement plate 20 is arranged within vessel 12 at a predetermined angle of between about 0° to about 90°, relative to the central axis of vessel 12 such that particle suspension 10 will impact a large portion of plate 20. Plate 20 is sized, in any planar geometric shape, larger than the cross-sectional diameter of inlet 13 and the incoming particle suspension 10. Plate 20 is typically held within vessel 12 with a plate rod 22, which provides for operator adjustment of the distance of plate 20 from inlet 13 from the exterior of the vessel. Other methods of mounting plate 20 within vessel 12 include, but are not limited to, adjustable or fixed braces or welding.

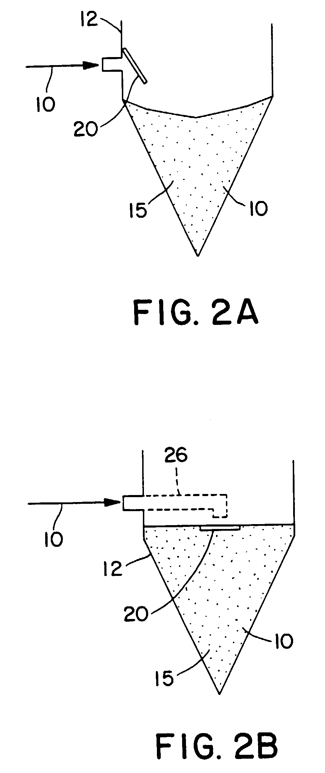

Referring to FIGS. 1, 2A and 2B, impingement plate 20 is shown in various positions with vessel 12. As noted above, impingement plate 20 is arranged within vessel 12 at a predetermined angle, depending upon the particle sizes and flow rates of the incoming particle suspension 10. FIG. 1 illustrates a vertical impingement plate 20, angled at 0° relative to the central axis of vessel 12, attached to plate rod 22. The particle suspension 10 is perpendicularly directed into impingement plate 20, which uniformly distributes particle suspension 10 within vessel 12 (net shown).

FIG. 2A illustrates an alternative arrangement of impingement 20. Plate 20 is attached to a wall of vessel 12, above inlet 13, and is angled downwardly such that the incoming particle suspension 10 is directed into bottom portion 15, wherein it is uniformly distributed prior to the settling of the heavier, coarser contaminant particles.

FIG. 2B illustrates an alternative method of introducing the particle suspension 10 into vessel 12, as well as arranging impingement plate 20. A directing conduit, or tube 26 is used to direct particle suspension 10 into the horizontally positioned impingement plate 20. As noted above, impingement plate 20 may be mounted within vessel 12 in any manner known to those skilled in the art. The particle suspension is uniformly distributed in bottom portion 15 after impact with plate 20.

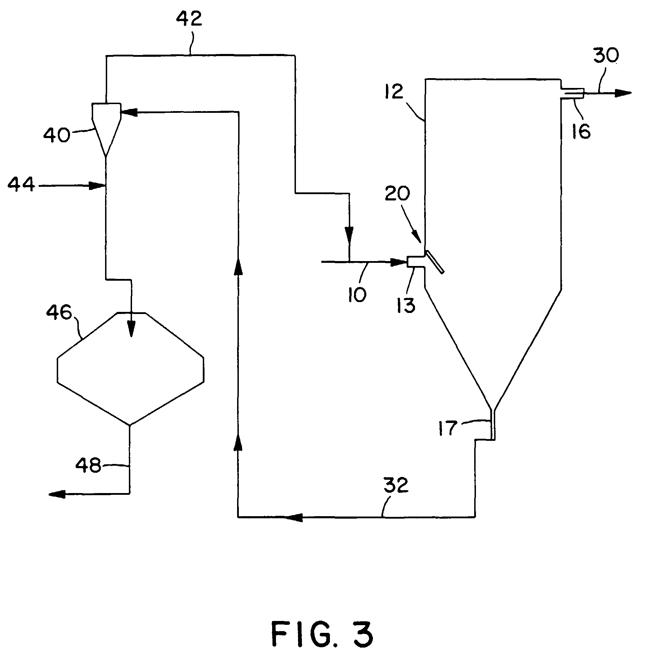

Referring now to FIG. 3, there is illustrated an alternative embodiment of the present invention. The contaminant and residual fine particle stream 32, produced as described above, is introduced into a classifier 40, wherein residual fine particles, such as fumed silica, which have settled with the contaminant particles in vessel 12 are separated from the contaminant particles. Classifier 40 may be a non-mechanical or a mechanical type classifier. A non-mechanical type classifier, such as a cyclone separator, is preferred because of the relative low cost of installation, operation and maintenance. As is known in the art, a cyclone separator operates by introducing a particle-laden gas into a cylindrical or conical chamber tangentially. The heavier and coarser contaminant particles will be discharged through a central bottom discharge outlet, while the lighter, fine particles, such as fumed silica, will exit through the top gas discharge outlet.

As shown in FIG. 3, the residual fine particle stream 42 is recycled to vessel 12, with particle suspension 10, into inlet 13. The overall process within vessel 12 as described above, is repeated as the recycle stream 42 and particle suspension 10 impact impingement plate 20. The particles are uniformly dispersed within vessel 12, where the contaminant particles settle and are removed through bottom discharge outlet 17, while the fine particles rise and are removed through top discharge outlet 16. The contaminant discharge stream 44 leaves classifier 40 through the central bottom discharge outlet, and is fed into a holding tank 46 where it is accumulated before being disposed through disposal stream 48.

As is illustrated above, the present invention teaches an improved method for separating fine particles from contaminant particles in a gaseous medium. By utilizing a system with no moving parts, it provides for a cost effective and efficient contamination removal process which is relatively insensitive to incoming velocities and varying contaminant levels. Finally, the present invention allows for operating flexibility, a low pressure drop, and a lower solids, i.e. fine particle, loss relative to conventional classification.

## Claims

1. A method for separating fumed silica having a nominal particle diameter of less than about 45.0 µm and a bulk density of less than about 160 kg/m³ (10 lbs/ft³) from contaminant particles, having a particle diameter and a bulk density greater than said fumed silica, suspended in a gas stream comprising:
- introducing said gas stream (10) at a predetermined velocity into a vessel (12) which is great enough to fluidize the fumed silica and to achieve a bulk velocity within said vessel (12) between 0.025 to 0.1 meter per second (5.0 to 20.0 feet per minute), the vessel (12) having a top (14) and bottom portion (15), each said portion having a discharge outlet (16, 17);
- directing said gas stream into an impingement plate (20), said plate (20) arranged within said vessel (12) at a predetermined angle such that said gas stream is uniformly distributed within said vessel (12) after impact with said plate (20); so that
- said fumed silica rises to said vessel top portion (14), and said contaminant particles and residual fumed silica settles to said vessel bottom portion (15);
- removing said fumed silica through said top discharge outlet (16); and
- removing said contaminant particles and residual fumed silica through said bottom discharge outlet (17).

2. The method of claim 1 further comprising the step of:
- introducing said contaminant particles and residual fumed silica (32) to a classifier (40) to separate said residual fumed silica (42) which settled with said contaminant particles in said vessel (12);
- recycling said residual fumed silica to said vessel (12); and
- discharging said contaminant particles (44).

3. The method of claim 2 wherein said classifier is a rotary classifier.

4. The method of anyone of claims 1-3 wherein said fumed silica has a nominal particle diameter of between about 1.0 to about 45.0 µm.

5. The method of anyone of claims 1-4 wherein said fumed silica has a bulk density of less than about 160 kg/m³ (10 lbs/ft³).

6. The method of claim 5 wherein the fumed silica has a bulk density of less than about 80 kg/m³ (5 lbs/ft³).

7. The method of anyone of claims 1-6 wherein said fumed silica and said contaminant particles are suspended in a dilute phase gas stream.

8. The method of anyone of claims 1-6 wherein said fumed silica and said contaminant particles are suspended in a dense phase gas stream.

9. The method of anyone of claims 1-8 wherein the bulk velocity within said vessel (12) is between 0,045 and 0,07 meter per second (9 ft/min to about 14 ft/min).

10. The method of anyone of claims 1-9 wherein said impingement plate (20) is arranged within said vessel at a predetermined angle of between 0° to 90° relative to the central axis of said vessel (12).

11. The method of claim 10 wherein the distance of the impingement plate (20) from the fumed silica inlet port (13) is adjustable.

12. The method of claim 10 or 11 wherein the size of the impingement plate (20) is larger than the cross-sectional diameter of the fumed silica inlet port (13) and the incoming particle gas stream (10).

13. The method of anyone of claims 10-12, wherein the impingement plate (20) is planar.

14. The method of anyone of claims 10-13, wherein the particle gas stream (10) is directed horizontally against the impingement plate (20).

15. The method of anyone of claims 10-13, wherein the particle gas stream (10) is directed perpendicularly against the impingement plate (20).

## Patentansprüche

1. Verfahren zum Trennen von pyrogener Kieselsäure mit einem nominalen Partikeldurchmesser von weniger als 45 µm und einer Fülldichte von weniger als ungefähr 160 kg/m³ (10 lbs/ft³) von kontaminierenden Partikeln mit einem Partikeldurchmesser und einer Fülldichte, die größer als die der pyrogener Kieselsäure sind, die einem Gasstrom suspendiert sind mit den Schritten:
- Einführen des Gasstroms (10) einer vorbestimmten Geschwindigkeit in ein Gefäß (12), die groß genug ist, die pyrogene Kieselsäure aufwirbeln zu lassen und eine mittlere Korngeschwindigkeit innerhalb des Gefäßes (12) von 0,05 bis 0,10 m/s (5,0 bis 20,0 ft/min) zu erreichen, wobei das Gefäß (12) ein Ober- (14) und ein Unterteil (15) aufweist, die beide eine Abführöffnung aufweisen;
- Führen des Gasstroms auf eine Aufprallplatte (20), wobei diese Platte (20) in dem Gefäß (12) unter einem vorbestimmten Winkel derart angeordnet ist, daß der Gasstrom nach dem Aufprallen auf besagte Platte gleichmäßig innerhalb des Gefäßes (12) verteilt wird; so daß
- die pyrogene Kieselsäure in das Gefäßoberteil (14) schwebt und die kontaminierenden Partikel und restliche pyrogene Kieselsäure sich im Gefäßunterteil (15) ablagern;
- Entfernen der pyrogenen Kieselsäure durch die obere Abführöffnung (16) und Entfernen der kontaminierenden Partikel und restlichen pyrogenen Kieselsäure durch die untere Abführöffnung (17).

2. Verfahren nach Anspruch 1 mit den zusätzlichen Schritten:
- Einführen der kontaminierenden Partikel und restlichen pyrogenen Kieselsäure (32) in einen Klassierer (40), um die restlichen pyrogene Kieselsäure (42), die sich mit den kontaminierenden Partikeln im Gefäß (12) abgelagert hat, abzutrennen;
- Zurückführen der restlichen pyrogenen Kieselsäure in das Gefäß (12); und
- Abführen der kontaminierenden Partikel (44).

3. Verfahren nach Anspruch 2, dadurch gekennzeichnet, daß der Klassierer ein rotierender Klassierer ist.

4. Verfahren nach einem der Ansprüche 1 bis 3, dadurch gekennzeichnet, daß die pyrogene Kieselsäure einen nominalen Partikeldurchmesser von etwa 1,0 bis etwa 45,0 µm aufweist.

5. Verfahren nach einem der Ansprüche 1 bis 4, dadurch gekennzeichnet, daß die pyrogene Kieselsäure eine Fülldichte von weniger als 160 kg/m³ (10 lbs/ft³) aufweist.

6. Verfahren nach Anspruch 5, dadurch gekennzeichnet, daß die pyrogene Kieselsäure eine Fülldichte von weniger als etwa 80 kg/m³ (5 lbs/ft³) aufweist.

7. Verfahren nach einem der Ansprüche 1 bis 6, dadurch gekennzeichnet, daß die pyrogene Kieselsäure und die kontaminierenden Partikel in einem verdünnten Gasphasenstrom suspendiert sind.

8. Verfahren nach einem der Ansprüche 1 bis 6, dadurch gekennzeichnet, daß die pyrogene Kieselsäure und die kontaminierenden Partikel in einem dichten Gasphasenstrom suspendiert sind.

9. Verfahren nach einem der Ansprüche 1 bis 8, dadurch gekennzeichnet, daß die mittlere Korngeschwindigkeit in dem Gefäß (12) zwischen 0,045 und 0,07 m/s (9 ft/min bis ungefähr 14/ft/min) beträgt.

10. Verfahren nach einem der Ansprüche 1 bis 9, dadurch gekennzeichnet, daß die Aufprallplatte (20) in dem Gefäß unter einem vorbestimmten Winkel zwischen 0° und 90° relativ zur zentralen Achse (12) angeordnet ist.

11. Verfahren nach Anspruch 10, dadurch gekennzeichnet, daß der Abstand der Aufprallplatte (20) zur Eintrittsöffnung für die pyrogene Kieselsäure (13) anpassbar ist.

12. Verfahren nach Anspruch 10 oder 11, dadurch gekennzeichnet, daß die Größe der Aufprallplatte (20) größer ist als der Innendurchmesser der Eintrittsöffnung (13) für die pyrogene Kieselsäure und des Durchmessers des eintretenden Partikelgasstromes (10) ist.

13. Verfahren nach einem der Ansprüche 10 bis 12, dadurch gekennzeichnet, daß die Aufprallplatte (20) eben ist.

14. Verfahren nach einem der Ansprüche 10 bis 13, dadurch gekennzeichnet, daß der Partikelgasstrom (10) horizontal gegen die Aufprallplatte (20) geführt wird.

15. Verfahren nach einem der Ansprüche 10 bis 13, daß der Partikelgasstrom (10) senkrecht gegen die Aufprallplatte (20) geführt wird.

## Revendications

1. Procédé pour séparer de la silice fumée présentant un diamètre de particules nominal inférieur à environ 45,0 µm et une densité apparente inférieure à environ 160 k/m³ (10 livres/pied³) de particules contaminantes, présentant un diamètre de particules et une densité apparente supérieurs à ladite silice fumée. suspendues dans un flux gazeux comprenant :
- l'introduction dudit flux gazeux (10) à une vitesse prédéterminée dans un récipient (12) qui est suffisamment grande pour fluidifier la silice fumée et pour atteindre une vitesse apparente dans ledit récipient (12) entre 0,025 à 0,1 mètre par seconde (5,0 à 20,0 pieds par minute), le récipient (12) présentant une partie supérieure (14) et une partie inférieure (15), chaque dite partie présentant une sortie de décharge (16, 17) ;
- la direction dudit flux gazeux dans un plateau d'impact (20), ledit plateau (20) monté dans ledit récipient (12) à un angle prédéterminé tel que ledit flux gazeux est uniformément distribué dans ledit récipient (12) après impact avec ledit plateau (20) ; de sorte que
- ladite silice fumée s'élève vers ladite partie supérieure du récipient (14), et lesdites particules contaminantes et la silice fumée résiduelle se déposent dans ladite partie inférieure du récipient (15) ;
- l'élimination de ladite silice fumée par ladite sortie de décharge supérieure (16), et
- l'élimination desdites particules contaminantes et de la silice fumée résiduelle par ladite sortie de décharge inférieure (17).

2. Procédé suivant la revendication 1, comprenant en outre l'étape de :
- l'introduction desdites particules contaminantes et de la silice fumée résiduelle (32) dans un classificateur (40) pour séparer ladite silice fumée résiduelle (42) qui s' est déposée avec lesdites particules contaminantes dans ledit récipient (12) ;
- le recyclage de ladite silice fumée résiduelle vers ledit récipient (12), et
- la décharge desdites particules contaminantes (44).

3. Procédé suivant la revendication 2, dans lequel le classificateur est un classificateur rotatif.

4. Procédé suivant l'une quelconque des revendications 1-3, dans lequel ladite silice fumée présente un diamètre de particules nominal d'entre environ 1,0 à environ 45,0 µm.

5. Procédé suivant l'une quelconque des revendications 1-4, dans lequel ladite silice fumée présente une densité apparente inférieure à environ 160 k/m³ (10 livres/pied³).

6. Procédé suivant la revendication 5, dans lequel la silice fumée présente une densité apparente inférieure à environ 80 k/m³ (5 livres/pied³).

7. Procédé suivant l'une quelconque des revendications 1-6, dans lequel ladite silice fumée et lesdites particules contaminantes sont suspendues dans un flux gazeux à phase diluée.

8. Procédé suivant l'une quelconque des revendications 1-6, dans lequel ladite silice fumée et lesdites particules contaminantes sont suspendues dans un flux gazeux à phase dense.

9. Procédé suivant l'une quelconque des revendications 1-8, dans lequel la vitesse apparente dans ledit récipient (12) est entre 0,045 et 0,07 mètre par seconde (9 pieds/min à environ 14 pieds/min).

10. Procédé suivant l'une quelconque des revendications 1-9, dans lequel ledit plateau d'impact (20) est monté dans ledit récipient à un angle prédéterminé d'entre 0° à 90° par rapport à l'axe central dudit récipient (12).

11. Procédé suivant la revendication 10, dans lequel la distance du plateau d'impact (20) à l'ouverture d'entrée de la silice fumée (13) est ajustable.

12. Procédé suivant la revendication 10 ou 11, dans lequel la taille du plateau d'impact (20) est plus grande que le diamètre transversal de l'ouverture d'entrée de la silice fumée (13) et le flux gazeux de particules entrant (10).

13. Procédé suivant l'une quelconque des revendications 10-12, dans lequel le plateau d'impact (20) est plane.

14. Procédé suivant l'une quelconque des revendications 10-13, dans lequel le flux gazeux de particules (10) est dirigé horizontalement par rapport au plateau d'impact (20).

15. Procédé suivant l'une quelconque des revendications 10-13, dans lequel le flux gazeux de particules (10) est dirigé perpendiculairement par rapport au plateau d'impact (20).
